# EUROPÄISCHE PATENTSCHRIFT

(11) **EP 0 805 171 B1**
(45) Veröffentlichungstag und Bekanntmachung des Hinweises auf die Patenterteilung: **15.09.2004**
(21) Anmeldenummer: 97106255.9
(22) Anmeldetag: 16.04.1997
(51) Int. Cl.: C08G 18/08, C08J 3/03, C09D 175/04

(54) **Verfahren zur Herstellung wässriger Beschichtungsmittel für Einbrennlackierungen**
Process for the preparation of aqueous coating compositions for stoving lacquers
Procédé de préparation de compositions de revêtement aqueuses pour des vernis au four

(30) Priorität: 29.04.1996 DE 19617086
(43) Veröffentlichungstag der Anmeldung: 05.11.1997
(73) Patentinhaber: Bayer MaterialScience AG, 51368 Leverkusen (DE)
(72) Erfinder: Wilmes, Oswald, Dr., 51061 Köln (DE); Kahl, Lothar, Dr., 51465 Bergisch Gladbach (DE); Klinksiek, Bernd, 51429 Bergisch Gladbach (DE); Wamprecht, Christian, Dr., 41472 Neuss (DE); Bock, Manfred, Dr., 51375 Leverkusen (DE); Nachtkamp, Klaus, Dr., 40593 Düsseldorf (DE)

(56) Entgegenhaltungen:
- EP-A- 0 524 511
- EP-A- 0 685 544
- DE-A- 2 906 159

## Beschreibung

Die Erfindung betrifft ein Verfahren zur Herstellung wäßriger Dispersionen, die eine Kombination von Hydroxylgruppen aufweisenden Polyolen mit blockierten Polyisocyanat-Vernetzern enthalten, die auf der zu beschichtenden Oberfläche pulverförmig auftrocknen und nach Einbrennen Lacke mit hoher Wasser- und Lösemittelresistenz, insbesondere auf metallischen Substraten ergeben.

Wäßrige Polyurethan-Dispersionen sind bekannt (vgl. z.B. Houben-Weyl, Methoden der organ. Chemie, 4. Aufl. Band E 20, S. 1659 (1987)). Für höhere Qualitätsanforderungen, wie sie z.B. bei der Automobillackierung bestehen, zeigen aber nichtreaktive Polyurethane verschiedene Schwächen. Wesentlicher Grund ist die fehlende Vernetzung zwischen den filmbildenden Makromolekülen, die sich in abgeschwächter Wasser- und Lösemittelbeständigkeit sowie geringwertigen mechanischen Eigenschaften äußern. Bessere Eigenschaften liefern die neueren nachvernetzenden Beschichtungssysteme, wie sie beispielsweise durch Kombination von isocyanatreaktiven Harzen mit blockierten Polyisocyanatvernetzern erhalten werden (vgl. J. W. Rosthauser, K. Nachtkamp in Advances in Urethane Science and Technology, K. C. Frisch and D. Klempner, Editors, vol. 10, S. 121 - 162 (1987)).

Als Harze werden Polyurethan-, Polyepoxid-, Polyester- oder Polyacrylatharze bzw. Dispersionen eingesetzt, die über Hydroxylgruppen vernetzbar sind. Vernetzer sind blockierte Polyisocyanate, die gegebenenfalls hydrophil modifiziert wurden. Solche Systeme sind z. B. aus DE-OS 4 213 527, EP-A 581 211, EP-A 427 028, US 4 543 144, DE-OS 3 345 448 und DE-OS 2 829 648 bekannt.

Die für Lack- und Beschichtungsanwendungen in Frage kommenden Systeme haben die Eigenschaft, bereits bei Raumtemperatur gute Filmbildungseigenschaften zu zeigen. Ist diese Eigenschaft nicht gegeben, so ergeben sich Filme mit insgesamt schlechteren Eigenschaften. Hier sind insbesondere schlechterer Lackverlauf und geringerer Glanz zu nennen. Teilweise wird auch die Filmbildung durch Zusatz von Lösemitteln gefördert.

Die Applikation von Pulverlacken aus wäßriger Phase wird z.B. in der EP-A 652 264 beschrieben. Nachteilig ist, daß sich bei der Herstellung an die Extrusion des Bindemittels ein Mahlvorgang anschließt, der sehr aufwendig und mit hohen Kosten verbunden ist. Außerdem sind der Feinteiligkeit der Pulver bei einem Mahlvorgang Grenzen gesetzt.

In EP 685 544 wird ein Verfahren zur Herstellung von wässrigen Lackemulsionen beschrieben, bei denen Isocyanat-reaktive Wasserstoffatome aufweisende Bindemittelharze und Polyisocyanate durch Vermischen der Komponenten mit Wasser eingesetzt werden und durch eine Düse mit geringen Dimension gedrückt wird. Feinteilige, pulverförmige auftrocknende Dispersionen werden nicht beschrieben.

Wie jetzt gefunden wurde, gelingt es, wertvolle lösemittelfreie, pulverförmig auftrocknende, hitzehärtende Lack-Dispersionen durch Kombination von ausgewählten, gegenüber Isocyanaten reaktiven Harzen mit blockierten Polyisocyanat-Vernetzern auf wirtschaftliche Weise zu erhalten. Die dabei resultierenden Produkte stellen wertvolle einkomponentig zu verarbeitende Beschichtungsmittel dar, und ermöglichen die Herstellung von Beschichtungen mit besonders hochwertigen Oberflächeneigenschaften. Hervorzuheben ist, dass gut verlaufende, hochglänzende Lackfilme mit sehr guten Wasser- und Lösemittelbeständigkeiten erhalten werden.

Vorteilhaft ist ferner, dass, obwohl es sich um pulverförmig auftrocknende Bindemittel handelt erfindungsgemäß hergestellte Lacke auf bestehenden Nass-Lackieranlagen verarbeitet werden können. Es werden dünnere Schichten als bei der herkömmlichen Pulverlackierung erhalten und Reinigungsvorgänge sind verglichen mit der Pulverlackierung durch Ausspritzen der Geräte und Kabinen vereinfacht. Auch im Vergleich zu lösemittelhaltigen Lackierungen ist der Reinigungsaufwand geringer, da keine Filmbildung bzw. im Vergleich zu 2K-Lacken keine Vernetzung bei Raumtemperatur auftritt. Herkömmliche bekannte Wasserlacksysteme, die bereits bei Raumtemperatur filmbildend sind, haben oft nur ein enges Applikationsfenster (Bereich von Temperatur und relativer Luftfeuchte bei der Anwendung) und zeigen eine deutliche Neigung zur Blasenbildung (Kocherbildung). Dies ist bei pulverförmig auftrocknenden Bindemitteln deutlich günstiger. Die Oberflächeneigenschaften sind weniger von den Khmabedingungen (Temperatur, rel. Luftfeuchte) während der Applikation abhängig. Ferner können größere Schichtstärken ohne Kocherbildung durch Verdunsten des Wassers erreicht werden.

Gegenstand der Erfindung ist ein Verfahren zur Herstellung wässriger, bei Raumtemperatur Pulverbeschichtungen bildender Dispersionen, die eine mittlere Teilchengröße der Dispersionspartikel von 0,1 bis 10 µm, vorzugsweise 0,1 bis 5 µm, insbesondere 0,1 bis 3 µm und, besonders bevorzugt 0,1 bis 0,6 µm Teilchendurchmesser haben, dadurch gekennzeichnet, dass
A) einer gegebenenfalls hydrophil modifizierten Polyolkomponente mit einer Glasübergangstemperatur Tg >30°C mit
B) einer gegebenenfalls hydrophilierten (cyclo)aliphatischen Biuret- und/oder Isocyanuratgruppe enthaltenden Polyisocyanatkomponente mit Isocyanatgruppen, die mit einem Blockierungsmittel, ausgewählt aus der Gruppe ε-Caprolactam, Malonsäurediethylester, Acetessigester, Oxime, 1,2,4-Triazol, Dimethyl-12,4-Triazol, 3,5-Dimethylpyrazol oder Imidazol blockiert sind, in Lösemitteln, die gegenüber NCO-Gruppen nicht reaktiv sind und durch Vakuumdestillation entfernt werden können, gelöst, anschließend die eingebauten Carboxylgruppen teilweise neutralisiert werden, durch Zugabe von Wasser dispergiert und das Lösemittel, das gegenüber NCO-Gruppen nicht reaktiv ist und durch Vakuumdestillation entfernt werden können, entfernt wird, wobei die Dispergiervorrichtung Druckentspannungshomogenisierdüsen enthält.

Für die erfindungsgemäße Herstellung der als Pulver auftrocknenden Dispersionen durch Dispergierprozesse gelangen Dispergiervorrichtungen mit hoher volumenbezogener Dispergierleistung wie z.B. Druckentspannungshomogenisierdüsen zur Anwendung.

Dispergiermaschinen sind z.B. aus Formation of Emulsions, in: P.Beche: Encyclopedia of Emulsion Technology, Vol. 1, New York, Basel, Decker 1983; bekannt, wurden aber zur Herstellung von pulverförmig auftrocknenden wäßrigen Dispersionen bisher noch nicht eingesetzt.

Dispergiermaschinen werden nach der Größe der volumenbezogenen Leistung ausgewählt. Zur Herstellung von feinteiligen Dispersionen (ca 1 µm Teilchendurchmesser) sind Dispergiermaschinen mit hohen volumenbezogenen Leistungen erforderlich, z.B. Hochdruckhomogenisatoren. Mit Rotor/Stator-Maschinen lassen sich so feinteilige Emulsionen nicht mehr herstellen. Bei dem in der EP-A 0 101 007 beschriebenen Strahldispergator handelt es sich um eine spezielle Druckentspannungsdüse, die einen wesentlich höheren Wirkungsgrad als Hochdruckhomogenisatoren hat. Schon bei 50 bar Homogenisierdruck werden mit dem Strahldispergator Partikelgrößenverteilungen erreicht, für die man bei dem Hochdruckhomogenisator 200 bar benötigt.

Mit dem Strahldispergator als Dispergiervorrichtung lassen sich besonders vorteilhaft feinteilige Dispersionen, sowohl kontinuierlich als auch diskontinuierlich herstellen.

Erfindungsgemäß kann auch die wäßrige Dispersion durch Phasenumkehr von einer Wasser-in-Öl in eine Öl-in-Wasser-Emulsion überführt werden.

Die erfindungsgemäß hergestellten wäßrigen Pulverbeschichtungsmittel können zur Einbrennlackierung auf beliebigen, hitzeresistenten Substraten verwendet werden, z.B. als nicht pigmentierter Klarlack oder als pigmentierter Lack zur Herstellung von Einschicht und Mehrschichtlackierungen, z.B. auf dem Kraftfahrzeugsektor.

Bei der Bindemittel-Komponente A) handelt es sich um in Wasser lösliche oder dispergierbare Polyhydroxylverbindungen der an sich aus der Chemie der Polyurethanlacke bekannten Art, vorausgesetzt die Polyhydroxylverbindungen weisen einen zu ihrer Löslichkeit bzw. Dispergierbarkeit in Wasser ausreichenden Gehalt an hydrophilen Gruppierungen, insbesondere Ethylenoxideinheiten aufweisenden Polyetherketten und/oder Carboxylatgruppen auf. Möglich ist auch die Verwendung von für sich allein nicht oder nicht ausreichend hydrophilen Polyhydroxylverbindungen in Abmischung mit externen Emulgatoren. Auch möglich ist, ein nicht oder nicht ausreichend hydrophiles Polyol (A) mit einem hydrophil modifizierten Vernetzer B) und gegebenenfalls einem externen Emulgator zu kombinieren.

Als Komponente A) in Betracht kommen Polyhydroxypolyester, Polyhydroxypolycarbonate, Polyhydroxyurethane oder Hydroxylgruppen aufweisende Polymerisate, d.h. die an sich bekannten Polyhydroxypolyacrylate, oder Mischungen der genannten Polyhydroxylverbindungen. Selbstverständlich können auch Mischungen der oben genannten Polyhydroxyverbindungen oder Polyhydroxyverbindungen, die Urethan- und/oder Polymerisat- und/oder Polyacrylat- und/oder Polyester- und/oder Polycarbonatstrukturen enthalten, eingesetzt werden.

Die eingesetzten Polyhydroxylverbindungen A) weisen eine Hydroxylzahl von 30 bis 200, vorzugsweise 40 bis 150 mg KOH/g auf und besitzen ein mittels Gelpermeationschromatographie (GPC) bestimmbares Molekulargewicht (Gewichtsmittel, Standard Polystyrol) von 500 bis 100 000, vorzugsweise 1 000 bis 50 000, insbesondere 2 000 bis 25 000 sowie eine nach der Differentialthermoanalyse (DTA) bestimmbare Glasübergangstemperatur Tg von 30 - 100°C.

Beispiele geeigneter Polyesterpolyole sind insbesondere die in der Polyurethanchemie an sich bekannten Umsetzungsprodukte von mehrwertigen Alkoholen mit Polycarbonsäuren bzw. Polycarbonsäureanhydriden, insbesondere Dicarbonsäuren bzw. Dicarbonsäureanhydriden.

Die erforderliche hydrophile Modifizierung dieser Polyester erfolgt nach an sich bekannten Methoden (z.B. EP-A-0 157 291, EP-A-0 427 028). Die in der DE-OS 3 829 587 beschriebenen, in Wasser löslichen oder dispergierbaren, Hydroxylgruppen aufweisenden Polymerisate sind erfindungsgemäß als Komponente A) ebenfalls geeignet.

Als Polycarbonatpolyole kommen die in der Polyurethanchemie an sich bekannten Polycarbonate, wie sie durch Umsetzung beispielsweise der obengenannten Diole mit Diarylcarbonaten oder Phosgen zugänglich sind, zum Einsatz.

Bei den Polyhydroxypolyacrylaten handelt es sich um an sich bekannte Mischpolymerisate von einfachen Estern der Acrylsäure und gegebenenfalls unter Zusatz von Styrol, wobei zwecks Einführung der Hydroxylgruppen Hydroxyalkylester wie beispielsweise 2-Hydroxyethyl-, 2-Hydroxypropyl-, 2-, 3- oder 4-Hydroxybutylester dieser Säuren mitverwendet werden. Zur Hydrophilierung dieser Polyhydroxypolyacrylate können bei der Herstellung olefinisch ungesättigte Carbonsäuren, beispielsweise Acrylsäureanteile mitpolymerisiert werden. Nach beendeter Umsetzung erfolgt eine zumindest teilweise Neutralisation der eingebauten Carboxylgruppen mit einem geeigneten Neutralisationsmittel. Geeignete Neutralisationsmittel sind Alkali- oder Erdalkalihydroxide, bevorzugt aber tertiäre Amine wie Triethylamin, Triethanolamin oder N,N-Dimethylethanolamin. Im allgemeinen werden die vorliegenden Carboxylgruppen zu mindestens 50 % neutralisiert, wobei gegebenenfalls auch ein Überschuß an Neutralisationsmittel zum Einsatz gelangen kann. Die Komponente A) weist im allgemeinen einen Gehalt an Carboxylgruppen von 0,1 bis 120, vorzugsweise 1 bis 80 Milliequivalenten pro 100 g Feststoff auf.

Die Herstellung der Polyolkomponente A) kann als Festharz oder in Lösung erfolgen. Falls die Herstellung in Lösung zur Anwendung kommt, so sind Lösemittel zu verwenden, die anschließend destillativ entfernt werden können.

Bei der Komponente B) handelt es sich um blockierte (cyclo)aliphatische Biuretund/oder Isocyanuratgruppen enthaltende, gegebenenfalls allophanatmodifizierte Polyisocyanate. Zur Herstellung der Polyisocyanatkomponente können die bekannten (cyclo)aliphatischen Diisocyanate eingesetzt werden. Vorzugsweise Verwendung finden 1,6-Diisocyanatohexan (HDI), 1-Isocyanato-3,3,5-trimethyl-5-isocyanatomethyl-cyclohexan (IPDI), 2,4- und/oder 2,6-Diisocyanato-1-methylcyclohexan (hydriertes Toluylendiisocyanat) und 4,4'-Diisocyanatodicyclohexylmethan (Desmodur W).

Zur Herstellung der erfindungsgemäßen Polyisocyanatkomponente B) werden die oben genannten Polyisocyanate mit üblichen Blockierungsmitteln in einer an sich bekannten Blockierungsreaktion blockiert und gegebenenfalls hydrophil modifiziert.

Als Blockierungsmittel werden die bekannten monofunktionellen Blockierungsmittel eingesetzt, wie z.B. ε-Caprolactam, Malonsäurediethylester, Acetessigester, Oxime wie Butanonoxim, 1,2,4-Triazol, Dimethyl-1,2,4-Triazol, 3,5-Dimethylpyrazol oder Imidazol. Ebenso können Gemische der genannten Blockierungsmittel eingesetzt werden. Bevorzugt eingesetzt werden Blockierungsmittel, die im Temperaturbereich bis 160°C zurückspalten, insbesondere Butanonoxim bzw. 3,5-Dimethylpyrazol.

Falls die Polyisocyanatkomponente hydrophil modifiziert wird, geschieht dies nach an sich bekannten Methoden, d.h. indem ein Teil der NCO-Gruppen mit Hydroxycarbonsäuren, z.B. 2,2-Dimethylolpropionsäure oder 3-Hydroxy-2,2-dimethylpropansäure (Hydroxypivalinsäure) und/oder mit monofunktionellen Polyethern mit einem Gehalt an Ethylenoxid von mindestens 80 Gew.-%.

Zur Herstellung der Vernetzerkomponente B) wird das Polyisocyanat nacheinander in beliebiger Reihenfolge oder gleichzeitig mit dem Blockierungsmittel und/oder der Hydroxycarbonsäure und/oder dem Polyether umgesetzt. Bevorzugt werden zunächst die Hydroxycarbonsäure und/oder der Polyether zur Reaktion gebracht und anschließend das Blockierungsmittel. Es kann hier auch ein geringfügiger Überschuß an Blockierungsmittel zum Einsatz gelangen. Es kann aber auch weitergearbeitet werden, wenn noch kleine Anteile an nicht-umgesetzten NCO-Gruppen im Reaktionsgemisch vorhanden sind. Die Umsetzungen erfolgen bei 0°C bis 120°C, bevorzugt bei 20 bis 120°C, wobei man besonders die Hydroxycarbonsäure unter milden Bedingungen abreagieren läßt, um zu verhindern, daß auch die Carboxylgruppe mit den NCO-Gruppen zur Reaktion kommt.

Die Umsetzungen werden in einem inerten Lösemittel durchgeführt, das nach der Umsetzung, Neutralisation und Aufnahme in Wasser durch beispielsweise Destillation entfernt wird. Als Lösemittel kommen solche in Frage, die gegenüber NCO-Gruppen nicht reaktiv sind. Beispielhaft genannt seien Ketone wie Aceton und Methylethylketon, Ester wie Ethylacetat aber auch Lösemittel wie N-Methylpyrrolidon und Butylglykolacetat, die unter Umständen auch in kleinen Anteilen als Stabilisierungs- bzw. Verlaufhilfsmittel in dem Beschichtungsmittel verbleiben können.

Nach beendeter Umsetzung erfolgt eine zumindest teilweise Neutralisation der eingebauten Carboxylgruppen mit einem geeigneten Neutralisationsmittel. Geeignete Neutralisationsmittel sind Alkali- oder Erdalkalihydroxide, bevorzugt aber tert.-Amine wie Triethylamin, Triethanolamin oder, besonders bevorzugt, N-Dimethylethanolamin. Im allgemeinen werden die vorliegenden Carboxylgruppen zumindest 50 % neutralisiert, wobei gegebenenfalls auch ein Überschuß an Neutralisationsmittel zum Einsatz gelangen kann.

Zur Herstellung der erfindungsgemäßen Beschichtungsmittel werden die beschriebenen Komponenten A) und B) in Lösemitteln gelöst, die durch Vakuumdestillation aus der wäßrigen Phase einer Dispersion entfernt werden können und gegenüber NCO-Gruppen nicht reaktiv sind. Beispielhaft genannt seien Ketone wie Aceton und Methylethylketon und Ester wie Ethylacetat, bevorzugt sind Aceton und Methylethylketon.

Selbstverständlich kann man auch so vorgehen, daß die Komponente A) und B) direkt in Lösung hergestellt werden und anschließend diese Lösung vermischt werden.

In diese Lösung von A) und B), die bereits das Neutralisationsmittel enthält, wird gegebenenfalls noch ein externer Emulgator C) zugesetzt, bevor die Lösung mit Wasser vermischt wird. Vorzugsweise wird die Wassermenge so gewählt, daß 20 bis 60 Gew.-%ige wäßrige Dispersionen der erfindungsgemäßen Beschichtungsmittel resultieren. Nach beendeter Wasserzugabe wird das Lösemittel vorzugsweise im Vakuum destillativ entfernt.

Grundsätzlich möglich wäre jedoch auch eine Vorgehensweise zur Herstellung der wäßrigen Lösungen bzw. Dispersionen, die darin besteht, freie Carboxylgruppen und blockierte Isocyanatgruppen aufweisende Mischung von A) und B), gegebenenfalls in Form einer organischen Lösung in einem der beispielhaft genannten Lösungsmittel, mit einer wäßrigen Lösung eines Neutralisationsmittels der genannten Art zu vermischen, so daß Neutralisation und Löse- bzw. Dispergiervorgang einstufig erfolgen.

Das Mischungsverhältnis der Polyhydroxylkomponente A) zu dem blockierten Polyisocyanat wird so gewählt, daß das Äquivalentverhältnis von blockierten Isocyanatgruppen der Komponente B) zu alkoholischen Hydroxylgruppen der Komponente A) bei 0,5:1 bis 2:1, vorzugsweise bei etwa 0,7:1 bis 1,5:1 liegt.

Übliche Zusatzmittel wie Pigmente, Dispergierhilfsmittel, Verlaufmittel, blasenverhindernde Mittel oder Katalysatoren können dem wäßrigen Bindemittelgemisch oder aber auch den Einzelkomponenten A) oder B) vor deren Vereinigung oder der Mischung der Komponenten A) und B) vor der Dispergierung zugegeben werden.

Die auf diese Weise hergestellten erfindungsgemäßen Überzugsmittel können nach an sich bekannten Methoden, beispielsweise durch Spritzen, Streichen, Tauchen, Fluten oder mit Hilfe von Walzen und Rakeln auf beliebig hitzeresistente Substrate ein- oder mehrschichtig aufgetragen werden.

Man erhält beispielsweise Überzüge auf Metall, Kunststoff, Holz oder Glas durch Aushärten des Lackfilmes bei 80 bis 220°C, vorzugsweise bei 110 bis 180°C, insbesondere 110 bis 160°C.

Die erfindungsgemäßen Bindemittel eignen sich vorzugsweise zur Herstellung von Überzügen und Lackierungen auf Stahlblechen wie sie beispielsweise zur Herstellung von Fahrzeugkarosserien, Maschinen, Verkleidungen, Fässern oder Containern Verwendung finden. Die Lackfilme haben im allgemeinen eine Trockenschichtdicke von 0,01 bis 0,3 mm.

Vorteilhaft im Vergleich zu Lösemittelsystemen ist der deutlich geringere Lösemittelgehalt zu nennen. Im Vergleich zu herkömmlichen Wasserlacken ist der deutlich geringere Gehalt organischer Colöser und die größere Applikationssicherheit durch das größere Applikationsfenster von Vorteil. Zusätzlich ist die deutlich geringere Kocherneigung und bessere Ablaufstabilität erwähnenswert.

Im Vergleich zu herkömmlichen Pulverlacken ist der gute Verlauf bei geringerer Schichtstärke zu nennen, die Applikation auf bestehenden 1K-Naßlack-Anlagen ist möglich, die Anlagenreinigung ist einfacher, und es treten keine Störungen auf der Lackierstraße durch vagabundierende Feinpulver auf.

### Beispiele

### 1. Allgemeine Arbeitsvorschrift zur Herstellung eines Polyhydroxyl-Polyesterpolyacrylats:

### Polyolkomponente A)

In einem 5 l-Edelstahldruckreaktor mit Rühr-, Kühl- und Heizvorrichtung sowie elektronischer Temperatursteuerung wird Teil I vorgelegt und auf Reaktionstemperatur aufgeheizt. Dann werden in den geschlossenen Reaktor gleichzeitig beginnend Teil II (Zugabe über einen Zeitraum von insgesamt 2,5 Stunden) und Teil III (Zugabe über einen Zeitraum von insgesamt 3 Stunden) bei konstanter Temperatur eindosiert. Nach Zugabe von Teil III wird 1 Stunde bei der Polymerisationstemperatur nachgerührt. Dann werden eventuell aus dem Initiator entstandene, flüchtige Spaltprodukte und eventuell vorhandene Restmonomeren durch kurzes Anlegen eines Vakuums von ca. 15 mbar bei der Polymerisationstemperatur destillativ entfernt. Anschließend wird das entstandene, heiße, niedrigviskose Produkt zum Abkühlen auf Alublechschalen aus dem Reaktor abgelassen. Nach Erstarren der Harzschmelze erfolgt deren mechanische Zerkleinerung.

Im Produktionsmaßstab erfolgt die Abkühlung des abgelassenen, heißen Produkts zweckmäßig auf Kühlbändern, denen eine Granulieranlage nachfolgt oder direkt aus Pastillierbändern.

Die Reaktionstemperaturen und die Zusammensetzungen der Teile I bis III sind in Tabelle 1 zusammen mit den Kenndaten der erhaltenen Produkte aufgeführt.

### Ausgangsmaterial:

Polyester: Polyesterpolyol der OH-Zahl 98 mg KOH/g, der Säurezahl 1,5 mg KOH/g, hergestellt durch Umsetzung von 22,07 Teilen 2-Ethylenhexansäure, 30,29 Teilen Trimethylolpropan (TMP), 12,67 Teilen Neopentylglykol, 32,24 Teilen Hexahydrophthalsäureanhydrid und 12,29 Teilen Adipinsäure.

**Tabelle 1**

| Polyester/Polyacrylat-Polyole A) des erfindungsgemäßen Verfahrens (Mengenangaben in g) | |
|---|---|
| Copolymerisat | I |
| Teil I | |
| Polyester | 350 |
| Maleinsäuredimethylester | 175 |
| | |

| Teil II | |
|---|---|
| Methylmethacrylat | 700 |
| Styrol | 1256 |
| Hydroxyethylmethacrylat | 568 |
| Butylmethacrylat | 350 |
| Acrylsäure | 31 |
| | |

| Teil III | |
|---|---|
| Di-tert.-butylperoxid | 70 |
| | |
| Polymerisationstemperatur (°C) | 160 |
| Festgehalt (%) | 99,8 |
| Säurezahl (mg KOH/g) | 7,8 |
| OH-Zahl (mg KOH/g) | 79,8 |
| Glasübergangstemperatur Tg (°C) | 49,6 |

### 2. Herstellung der Vernetzerkomponente B)

### a) Herstellung des Polyisocyanats

Polyisocyanat auf Basis 4,4'-Diisocyanatodicyclohexylmethan (®Desmodur W der Bayer AG) und n-Butanol.

Herstellung gemäß EP 0 649 866

| | |
|---|---|
| NCO-Gehalt (%) | 13,4 |
| Farbzahl | 10 APHA |
| freies Ausgangsdiisocyanat (%) | 0,2 |
| NCO-Funktionalität | ca. 2,5 |

### b) Blockierung des Polyisocyanats

313 Teile des oben genannten Polyisocyanat Festharzes werden vorgelegt und bei ca. 100 - 120°C aufgeschmolzen. Portionsweise werden 96 Teile 3,5-Dimethylpyrazol zugegeben. Es wird 6 Stunden bei 120°C gerührt, bis IR-spektroskopisch kein NCO-Gehalt mehr nachweisbar ist.

### 3. Herstellung der auf einer Oberfläche pulverförmig auftrocknenden wäßrigen Dispersion

701,6 g des Polyhydroxyl-Polyesterpolyacrylats (Polylkomponente A) und 409,2 g des blockierten Polyisocyanates (Vernetzerkomponente B) werden in 1676,8 g des Lösemittels Methylethylketon (MEK) gelöst und mit 7,1 g des Neutralisationsmittels Dimethylethanolamin versetzt. Anschließend werden folgende Additiv-Mengen zugegeben: 6,9 g Byk 348 (Verlaufsmittel, Fa. Byk-Chemie), 27,7 g Borchigen SN95 (Emulgierhilfsmittel, Fa. Borchers GmbH), 27,7 g Butyldiglykolacetat (organisches Colösemittel).

Die Herstellung der wäßrigen Dispersion wird beispielhaft an zwei Verfahren beschrieben:
a) Aus 2857 g der Lösung von Bindemittel, Neutralisationsmittel und Additive in MEK wird durch intensives Vermischen mit 1736,6 g Wasser mittels eines Dissolvers eine Voremulsion des Typs Öl-in - Wasser hergestellt. Anschließend wird diese Voremulsion unter erhöhtem Druck (20 bar) durch einen Strahldispergator, wie in EP 0101007 beschrieben, feindispergiert. Das MEK wird im Vakuum abdestilliert. Es resultiert eine Polymerdispersion mit folgenden Kenndaten:

| | |
|---|---|
| Auslaufzeit (ISO 4-Becher, 23°C) | 14 sec |
| Festkörpergehalt | 39 % |
| Gehalt organischer Colöser | 1 % Butyldiglykolacetat |
| Teilchengröße (Laser-Korrelations-Spektroskopie) | 0,42 µm bei K2-Wert = 0,13 |

b) Aus 2857 g der Lösung von Bindemittel, Neutralisationsmittel und Additive in MEK wird durch intensives Vermischen mit 521 g Wasser mittels eines Dissolvers eine Wasser-in-Öl-Emulsion hergestellt, die anschließend durch kontinuierliche Zugabe von 1215,6 g Wasser und gleichzeitiger Passage durch einen Strahldispergator bei erhöhtem Druck (20 bar) gemäß EP 0101007 eine Phasenumkehr in eine Öl-in-Wasser-Emulsion erfährt. Das MEK wird im Vakuum abdestilliert. Es resultiert eine Polymerdispersion mit folgenden Kenndaten:

| | |
|---|---|
| Auslaufzeit (ISO 4-Becher, 23°C) | 14 sec |
| Festkörpergehalt | 39 % |
| Gehalt organischer Colöser | 1 % Butyldiglykolacetat |
| Teilchengröße (Laser-Korrelations-Spektroskopie) | 0,23 µm bei K2-Wert = 0,07 |

### 4. Applikation und Eigenschaften

Es werden beispielhaft die Applikation und Filmeigenschaften eines Klarlackes beschrieben.

Die Lackdispersion wird mit Verdicker Borchigel LW44 (Fa. Borchers) auf Applikationsviskosität eingestellt.

Wird die Lackdispersion auf eine Oberfläche appliziert und bei Raumtemperatur getrocknet, so bildet sich eine pulverförmige Oberfläche, die mit Wasser leicht zu entfernen ist.

Wird die wäßrige Dispersion unmittelbar nach der Applikation eingebrannt, so entsteht ein hoch-glänzender Lackfilm mit gutem Lackverlauf und gutem Beständigkeitsverhalten gegen Wasser und organische Lösemittel.

Die Applikation erfolgte beispielhaft mittels einer handelsüblichen Air-Mix-Spritzpistole auf ein Blech, das mit einer wäßrigen kathodischen Tauchlackierung, einer wäßrigen Füllerschicht und einer wäßrigen schwarzen Basislackschicht, wie sie bei der Autoerstlackierung üblicherweise eingesetzt werden, vorbeschichtet war.

### Trocknungsbedingungen:

1 Minute 23°C, dann
Aufheizen auf 140°C in 3 Minuten und
endhärten bei 140°C innerhalb von 30 Minuten.

### Lackeigenschaften:

| | |
|---|---|
| Trockenfilmschichstärke | 40 µm |
| Glanz 20°/60° | 80/97 |
| Wasserbelastung 24 h bei 23°C | keine Veränderung |
| Lösemittelbeständigkeit^{*)} | |
| Belastungszeit 1 Minute | 0/0/1/3 |
| 5 Minuten | 50/1/3/5 |

| | |
|---|---|
| Losemitteltypen^{*)}: Xylol/Methoxypropylacetat/ Ethylacetat/Aceton Bewertung von 0 = unbeschädigt bis 5 = stark angelöst | |

## Patentansprüche

1. Verfahren zur Herstellung wässriger, bei Raumtemperatur pulverförmig auftrocknende Dispersionen, die eine mittlere Teilchengröße der Dispersionspartikel von 0,1 bis 10 µm Durchmesser haben, **dadurch gekennzeichnet, dass**
A) eine gegebenenfalls hydrophil modifizierte Polyolkomponente mit einer Glasübergangstemperatur T_{g} > 30°C mit
B) einer gegebenenfalls hydrophilierten (cyclo)aliphatischen Biuretund/oder Isocyanuratgruppen enthaltenden Polyisocyanatkomponente mit Isocyanatgruppen, die mit einem Blockierungsmittel, ausgewählt aus der Gruppe ε-Caprolactam, Malonsäurediethylester, Acetessigester, Oxime, 1,2,4-Triazol, Dimethyl-1,2,4-Triazol, 3,5-Dimethylpyrazol oder Imidazol, blockiert sind,
in Lösungsmitteln, die gegenüber NCO-Gruppen nicht reaktiv sind und durch Vakuumdestillation entfernt wenden können, gelöst, anschließend die eingebauten Carboxylgruppen teilweise neutralisiert werden, durch Zugabe von Wasser dispergiert und das Lösungsmittel, das gegenüber NCO-Gruppen nicht reaktiv ist und durch Vakuumdestillation entfernt werden können, entfernt wird, wobei die Dispergiervorrichtung Druckentspannungshomogenisierdüsen enthält.

2. Verwendung der nach Anspruch 1 hergestellten wässrigen, bei Raumtemperatur pulverförmig auftrocknenden Dispersionen für die Herstellung von Einbrennlackierungen, die im Temperaturbereich zwischen 80 und 220°C eingebrannt werden.

3. Verwendung der wässrigen, bei Raumtemperatur pulverförmig auftrocknenden Dispersionen gemäß Anspruch 1 in pigmentfreier Form als Klarlack für die Herstellung von Einschicht- oder Mehrschichtlackierungen.

4. Verwendung der wässrigen, bei Raumtemperatur pulverförmigauftrocknenden Dispersionen gemäß Anspruch 1 in pigmentierter Form für die Herstellung von Einschicht- oder Mehrschichtlackierungen.

5. Verwendung der wässrigen, bei Raumtemperatur pulverförmig auftrocknenden Dispersionen gemäß Anspruch 1 für die Herstellung von Mehrschichtlackierungen im Kraftfahrzeugsektor.

## Claims

1. Process for the production of aqueous dispersions which dry to powder at room temperature and which have an average particle size of 0.1 to 10 µm, **characterized in that**
A) an optionally hydrophilically modified polyol component which has a glass transition temperature T_{g} > 30°C with
B) an optionally hydrophilicized (cyclo)aliphatic polyisocyanate component which contains biuret groups and/or isocyanurate groups and contains isocyanate groups blocked with a blocking agent selected from the group consisting of ε-caprolactam, diethyl malonate, acetoacetic esters, oximes, 1,2,4-triazole, dimethyl-1,2,4-triazole, 3,5-dimethylpyrazole and imidazole
are dissolved in solvents which are not reactive toward NCO groups and can be removed by vacuum distillation, subsequently some of the incorporated carboxyl groups are neutralized, the components are dispersed by adding water and the solvent which is not reactive toward NCO groups and can be removed by vacuum distillation is removed, the dispersing device comprising flash homogenizing nozzles.

2. Use of the aqueous dispersions which dry to a powder at room temperature, prepared according to Claim 1, for the production of stoving enamel systems which are stoved in the temperature range between 80 and 220°C.

3. Use of the aqueous dispersions which dry to a powder at room temperature, according to Claim 1, in pigment-free form as clear coating material for the production of single-layer or multi-layer coatings.

4. Use of the aqueous dispersions which dry to a powder at room temperature, according to Claim 1, in pigmented form for the production of single-layer or multi-layer coatings.

5. Use of the aqueous dispersions which dry to a powder at room temperature, according to Claim 1, for the production of multi-layer coatings in the automotive sector.

## Revendications

1. Procédé de préparation de dispersions aqueuses séchant sous forme de poudre à température ambiante qui présentent une taille moyenne des particules de dispersion de 0,1 à 10 µm de diamètre, caractérisé en ce
A) qu'un composant polyol éventuellement à modification hydrophile avec une température de transition vitreuse Tg >30°C est dissous avec
B) un composant polyisocyanate contenant des radicaux biuret et/ou isocyanurate (cyclo)aliphatique éventuellement rendu hydrophile comportant des radicaux isocyanate qui sont bloqués avec un agent bloquant, sélectionné dans le groupe ε-caprolactame, diéthylester d'acide malonique, esters acétiques, oximes, 1,2,4-triazole, diméthyl-1,2,4-triazole, 3,5-diméthylpyrazole, ou imidazole
dans des solvants qui ne sont pas réactifs aux radicaux NCO et peuvent être éliminés par distillation sous vide; les radicaux carboxyle intégrés sont ensuite neutralisés partiellement, dispersés par addition d'eau et le solvant qui n'est pas réactif aux radicaux NCO et peut être éliminé par distillation sous vide est éliminé, le dispositif de dispersion contenant des tuyères d'homogénéisation à détente.

2. Mise en oeuvre de dispersions aqueuses séchant sous forme de poudre à température ambiante, préparées selon la revendication 1, pour la préparation de peintures à cuire qui sont cuites dans une plage de température entre 80 et 220°C.

3. Mise en oeuvre de dispersions aqueuses séchant sous forme de poudre à température ambiante selon la revendications 1 sous forme non pigmentée comme peinture transparente pour la fabrication de peintures en une ou plusieurs couches.

4. Mise en oeuvre de dispersions aqueuses séchant sous forme de poudre à température ambiante selon la revendications 1 sous forme pigmentée pour la fabrication de peintures en une ou plusieurs couches.

5. Mise en oeuvre de dispersions aqueuses séchant sous forme de poudre à température ambiante selon la revendication 1 pour la préparation de peintures à plusieurs couches dans le secteur automobile.
